# EUROPEAN PATENT SPECIFICATION

(11) **EP 0 564 508 B1**
(45) Date of publication and mention of the grant of the patent: **27.09.1995**
(21) Application number: 92901538.6
(22) Date of filing: 20.12.1991
(51) Int. Cl.: B60R 9/06

(54) **LUGGAGE CARRIER FOR MOTORCARS**
GEPÄCKTRÄGER FÜR KRAFTFAHRZEUGE
PORTE-BAGAGES POUR VEHICULES A MOTEUR

(30) Priority: 27.12.1990 NL 9002874
(43) Date of publication of application: 13.10.1993
(73) Proprietor: PALMEN, Isedore Desiré Maria Hubertina, NL-6585 XA Mook (NL)
(72) Inventor: PALMEN, Isedore Desiré Maria Hubertina, NL-6585 XA Mook (NL)
(74) Representative: Jilderda, Anne Ayolt
(86) International application number: EP9102467
(87) International publication number: WO9212027

(56) References cited:
- DE-A- 3 108 294
- GB-A- 2 175 859
- GB-A- 2 195 304
- GB-A- 2 197 273
- NL-A- 8 100 211
- US-A- 4 412 635

## Description

The invention concerns a luggage carrier and device for mounting said luggage carrier to the towing hook of a motorcar, with a clamping piece that is mounted upon the horizontal part of the towing hook, provided with a part with guiding means, standing out in backward direction which cooperates with parts of the luggage carrier in such a way that the luggage carrier can move perpendicular to the towing hook, the movement being limited in downward direction, because a part of the luggage carrier is stopped by the ball of the towing hook.

For instance is known a device for mounting a bicycle carrier upon the towing hook of a motorcar. A well known embodiment of such a device consists of two parts: firstly a clamping piece that is mounted upon the horizontal part of the towing hook by means of clamping straps and with attached thereto a part to which the carrier is mounted - and secondly a part which is solidly connected to the carrier and with which the carrier is connected to the holding part of the clamping piece and thus to the towing hook of the car. The holding part then has guiding means that make that the luggage carrier, when being mounted, can glide downward along these means until it arrests. This arresting happens when the ball of the towing hook bounces against a solid part of the carrier. The guiding means can for example be: two tubular parts that are open on the top side and in which a part of the luggage carrier can be fitted with two pins. This type of construction is known from for instance the Dutch patent publication no.8100211.

In such known constructions the luggage carrier is fixed in its final position by means of, for example, a bolt that is screwed from the outside through a wail of the part of the luggage carrier of the towing hook which lies behind it. The carrier is thus clamped upon the towing hook. The mentioned guiding system makes that the carrier can not, or at least can not easily, move sidewards.

The known fastening constructions have several disadvantages. An important disadvantage for example is that the luggage carrier easily starts to rattle on the towing hook and/or at the vertical guiding means. This not only produces an annoying sound, but it also easily leads to vibrating loose the bolt with which the luggage carrier is attached to the towing hook.

Another disadvantage is that the luggage carrier can relatively easily can come loose from the ball of the towing hook. This of course is disadvantageous in relation to traffic safety and in some countries this made that the mentioned construction did not receive the official, required safety certificate and consequently may not be brought onto the market.

The invention concerns a construction that does not have the above mentioned disadvantages. To that end the device is characterised in that the part of the luggage carrier which is equipped with means that cooperate with the guiding means, has a vertical gutter-shaped indentation which can hold the vertical part of the towing hook and the ball and has on its upper side a mechanism with which it can be clamped upon the ball, in which situation it can be locked.

Essential for the device is the improved attachment of the luggage carrier, i.e. with the gutter-shaped indentation on the towing hook and the ball, as a result of which an unwanted sideward movement is prevented to a large extend, and the safety lock. In this construction the luggage carrier can not come loose, which grades up its safety- and with the mentioned connection the chance that the luggage carrier will rattle is drastically reduced.

According to an embodiment of a device according to the invention, the indicated improved attachment of the luggage carrier on the ball is realized by a clamping mechanism with which the carrier part is mounted upon the ball, comprising a shell-shaped part which - in clamped position - clamps around a part of the ball. In this position the ball is 'firmly grasped' over a part of its surface. This 'grasping' can be realized by a click mechanism that is automatically activated when the mentioned part of the luggage carrier is placed upon the towing hook, resulting in a strong interlocking.

In a preferred embodiment of a device according to the invention, it has a clamping mechanism with a body that contains a tiltable, shell-shaped part with which a spring cooperates in such a manner, that when the ball of the towing hook lies against the upper limitation of the gutter-shaped indentation, the shell-shaped part is clamped against the ball by means of the spring force and that it also is equipped with a handle, rotatable around an axis, which is parallel to, or coinciding with the tilting axis of the shell-shaped part, which cooperates with the spring such, that if it is activated, the spring force no longer acts upon the shell-shaped part and it consequently becomes free tiltable. In tilted-aside position the luggage carrier then can be placed upon the ball of the towing hook.

When the carrier is mounted upon the towing hook, the handle, which, when not used, is in vertical position and which hinges on its far end, is pulled. With the handle the spring, which is prestressed and in resting position both locks the handle in its vertical position and the shell-shaped part in its clamped position, is prestressed additionally. The spring is connected to the shell-shaped part in such a way that when the spring is pulled, the spring force no longer acts on the shell-shaped part, which therefore becomes free movable, which in this case means: it becomes tiltable. When the shell-shaped part is tilted, a space comes free for the ball of the towing hook, which when the luggage carrier is brought in position, comes to rest against a stopping shoulder on the luggage carrier. When then the handle is released, the spring force will make that the shell-shaped part will clamp around the ball of the towing hook and that the handle will take its vertical position again.

Preferably the device according to the invention is constructed in such a manner that it comprises a handle which on the sides has protrusions moving in slotted holes in the side sides of the luggage carrier part, cooperating with holes in the walls of the body, so that if the handle is activated, the body and with the body, the shell-shaped part, turns. When the handle is pulled via those indentations, the body is tilted and the shell-shaped part 'comes free' to let the ball of the towing hook through.

A further preferred embodiment of the device according to the invention, is the one in which the handle has a protrusion over its turning axis, which sticks out through an opening in the upper wall of the housing when that shoulder is pushed against the upper wall of the housing and further showing a shoulder, extending under that upper wall, which when that shoulder is pushed against the upper wall of the housing, makes it impossible to turn the handle - and with that to unlock the coupling. This embodiment makes the coupling between the towing and the carrier very safe and extra secure. When, for example, the spring would give away, or when a sudden force would act on the handle in backward direction, this will not lead to an unlocking of the ball of the towing hook since the handle lies with the shoulder against the upper wall of the housing. The clamping mechanism automatically falls into that locked position as soon as the luggage carrier is clamped upon the towing hook.

The invention will be further explained on the basis of the drawing which schematically represents an embodiment of a device according to the invention. In this drawing:
Figure 1 represents, in perspective, the clamping piece that is mounted upon the towing hook.
Figure 2 shows, also in perspective, the part of the luggage carrier with which it is connected to the clamping piece and
Figure 3 shows by a cut-away side view in the part how, shown in Figure 2, the clamping mechanism works.

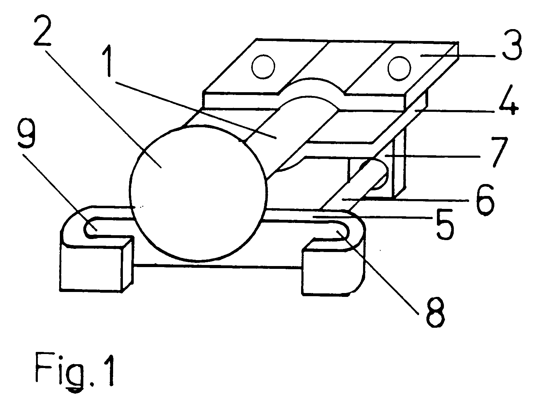

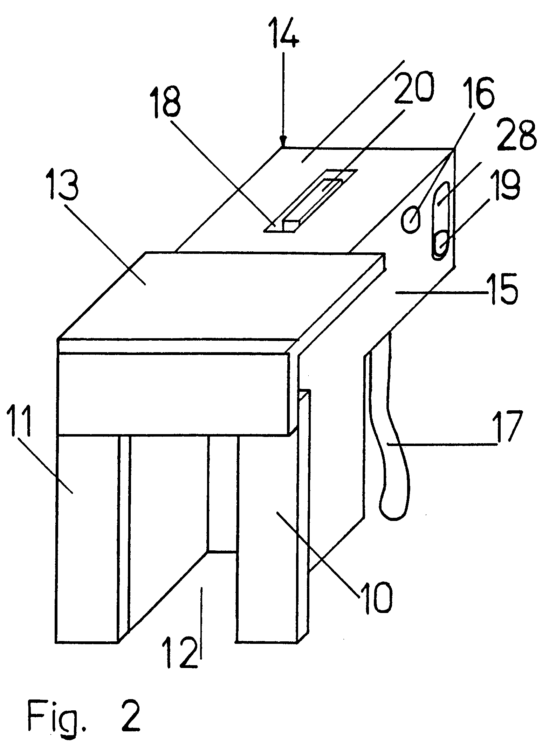

In Figure 1, 1 represents the towing hook and 2 the ball of the towing hook. The clamping piece is clamped upon the horizontal part of the towing hook by means of the clamping brackets 3 and 4. Part 5 of the clamping piece, which is connected to the clamping brackets 3 and 4 by means of the bolts 6 and the cross strap 7, sticks out from under the towing hook 1. It is provided with guiding means 8 and 9. Parts 10 and 11 (shown in Figure 2) cooperate with those guiding means 8 and 9.

In the part of the luggage carrier that is shown in Figure 2, 12 is the gutter-shaped indentation which, when the part with the guiding means 10 and 11 is pushed into the guiding means 8 and 9, holds the upright part of the towing hook 1 and the ball 2. The ball 2 will stop at the underside against the upper wall 13 of that indentation 12. When thus constructed, the sideward movement of the carrier part in relation to the clamping piece is drastically prevented.

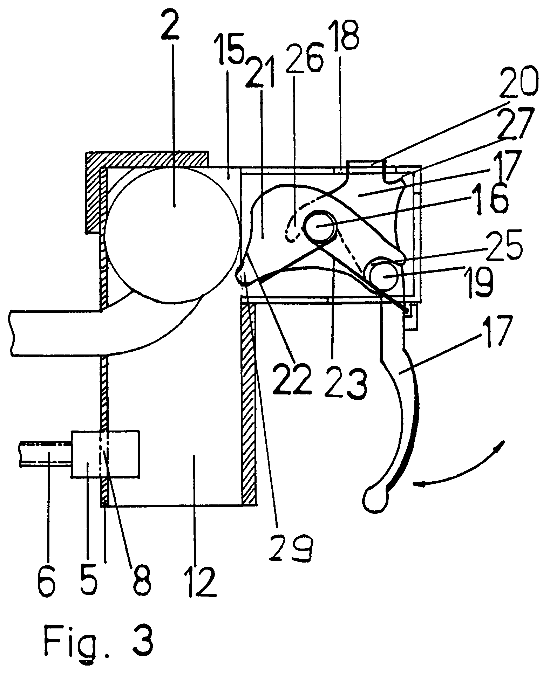

In Figure 2, 14 is a housing in which in the side walls 15 a axis 16 is mounted with bearings, around which in the shown embodiment both the handle 17 and the shell-shaped part 22 (see Figure 3) rotate. 28 Is a slotted hole in which the protrusions 19, which are situated on both the sides of the handle 17, and form one unit therewith, may slide to and fro. When the protrusions 19 are in the upper parts of the slotted holes 28, the upper part 20 of the handle 17 will stick out through the groove-shaped opening 18 in the upper wall of the housing and in that situation a shoulder 27 under/on the side of the upper part 20 (see Figure 3) will cause an extra lock. In the housing 14 the body 21 with the shell-shaped part 22 and the spring 23 are situated (see Figure 3).

Figure 3 shows a cut-away side view of the part of the luggage carrier drawn in Figure 2. The gutter-shaped part 12 is pushed along the ball of the towing hook in which situation the strap 10 shoves into the guiding means 8. The guiding means 8 and 9 (the latter is not drawn) are part of the part 5, which is connected to the horizontal part of the towing hook by means of the bolts 6 and the clamping piece (not drawn).

The ball 2 of the towing hook lies against the underside of the upper/side wall of the housing. This makes that a further movement of the luggage carrier in downward direction has become impossible. The ball 2 can get into this drawn situation when the handle 17 is moved to the right when the luggage carrier is placed upon the ball. That handle 17 clamps with a claw 26 around the axis 16 in the housing 14. When the handle 17 is moved to the right, it rotates around that axis 16. The body 21 can also rotate around the axis 16. That body 21 has a shell-shaped part 22 that has a form more or less similar to the surface of the ball 2 and may ly against that surface, so that it partially may hold the ball. The body 21 is mainly a strip bent in a U-form. The base of this strip is the shell-shaped part 22. Inside the 'U' the handle 17 hinges. This handle has protrusions on both sides, which stick out through an opening 28 (a slotted hole - see Figure 2), and which both are enclosed by the indentation 25 in the side walls of the strip, bent in the U-form. The strip forms the body 21 on the far ends thereof. When the handle is moved to the right, it hinges around the axis 16 and moves the body 21 to the right via the protrusions 19 and the indentations 25. The body 21 then also rotates around the axis 16, while the shell-shaped part 22 and together therewith the protrusions 29 move away from the place in which the ball 2 of the towing hook has to fall. This ball 2 then can move 'beyond' the protrusion 29 and thus can come into the drawn position.

A spring 23 is connected around the axis 16 with one end and around the handle 17 with the other end. This spring 23 in its resting position is extended and is pulled even further when the handle 17 is moved to the right. When after the rightward movement the handle is released, it will be pulled back into its vertical position as a result of the spring force, until the shell-shaped part 22 will stop against the surface of the ball 2 of the towing hook. The ball 2 can only be unlocked by moving the handle 17 to the right.

To avoid that the locked connection between the luggage carrier and the ball 2 nevertheless is unlocked, for example because the spring gives away or because the handle 17 is accidently moved to the right, the handle 17 on its upper side has a part 20 with which it sticks out through an opening in the upper side of the housing 14. The handle also has a shoulder 27. When the handle 17 is moved to the right, it will have very limited space for movement. That space for movement is very limited by the shoulder 27, which stops against the innerside of the upper wall, thus considerably grading up the safety of the coupling.

## Claims

1. Luggage carrier and device for mounting said luggage carrier to the towing hook (1) of a motorcar, with a clamping piece that is mounted upon the horizontal part of the towing hook (1), provided with a part with guiding means (8, 9), standing out in backward direction which cooperates with parts (10, 11) of the luggage carrier in such a way that the luggage carrier can move perpendicular to the towing hook (1), the movement being limited in downward direction, because a part of the luggage carrier is stopped by the ball (2) of the towing hook (1),
characterized in that the luggage carrier part, which is equipped with means (10, 11) that cooperate with the guiding means (8, 9), has a gutter-shaped indentation (12) that can hold the vertical part of the towing hook (1) and the ball (2), and has on its upper side a mechanism with which it can be clamped upon the ball (2), in which situation it can be locked.

2. Device according to claim 1,
characterized in that the clamping mechanism of the luggage carrier comprises a body (21) with a shell-shaped part (22), which in clamped position holds a part of the ball (2).

3. Device according to claim 1 or 2,
characterized in that the clamping mechanism is a click mechanism that works automatically when it is placed upon the ball (2).

4. Device according to claim 1 or 2,
characterized in that with the body (21) comprising the tiltable shell-shaped part (22), a spring (23) cooperates in such a manner that when the ball (2) of the towing hook (1) lies against the upper wall of the gutter-shaped indentation (12) by the spring force the shell-shaped part (22) is clamped against the ball (2), it being provided with a handle (17) which can rotate around an axis parallel to, or coinciding with the tilting axis of the shell-shaped part (22), which cooperates with the spring (23) in such a way that when the handle (17) is pulled, the spring force on the body (21) ceases, thus the shell-shaped part (22) becoming tiltable.

5. Device according to claim 4,
characterized in that on both sides the handle (17) has protrusions (19), moving in slotted holes (28) in the side walls (15) of the luggage carrier part, cooperating with holes (25) in the walls of the body (21), such that if the handle is activated, the body (21) and with the body the shell-shaped part (22), turns.

6. Device according to claim 5,
characterized in that the handle (17) has a protrusion (20) over its turning axis (16), which sticks out through an opening (18) in the upper wall of the housing, and further showing a shoulder (27), extending under that upper wall, which when the handle (17) is pushed against the upper wall of the housing, makes it impossible to turn the handle (17) and with that, to unlock the coupling.

## Patentansprüche

1. Gepäckträger und Vorrichtung zur Befestigung von besagtem Gepäckträger an der Anhängerkupplung (1) eines Motorfahrzeuges mit einem Klemmstück, das auf dem waagerechten Teil der Anhängerkupplung (1) befestigt wird, das mit einem sich nach hinten erstreckenden Teil mit Führungen (8, 9) versehen ist, die mit den Teilen (10, 11) des Gepäckträgers auf eine Weise zusammenwirken, daß der Gepäckträger senkrecht zur Anhangerkupplung (1) bewegt werden kann, die Bewegung in abwärts führender Richtung dadurch begrenzt wird, daß ein Teil des Gepäckträgers von der Kugel (2) der Anhängerkupplung (1) aufgehalten wird,
dadurch gekennzeichnet, daß das Teil des Gepäckträgers, das mit den Mitteln (10, 11) ausgerüstet ist, die mit den Führungen (8, 9) zusammenwirken, eine rinnenförmige Aussparung (12) hat, die den senkrechten Teil der Anhängerkupplung (1) und die Kugel (2) halten kann, und das an seiner Oberseite einen Mechanismus besitzt, mit dem es auf der Kugel (2) festgeklemmt werden kann, in welcher Situation es blockiert werden kann.

2. Vorrichtung gemäß Anspruch 1,
dadurch gekennzeichnet, daß der Klemm-Mechanismus des Gepäckträgers einen Körper (21) mit einem schalenförmigen Teil (22) enthält, der in geklemmtem Zustand einen Teil der Kugel (2) umschließt.

3. Vorrichtung gemäß Anspruch 1 oder 2,
dadurch gekennzeichnet, daß der Klemm-Mechanismus ein Klick-Mechanismus ist, der automatisch funktioniert, sobald er auf die Kugel (2) aufgesetzt wird.

4. Vorrichtung gemäß Anspruch 1 oder 2,
dadurch gekennzeichnet, daß mit dem Körper (21), der das kippbare schalenförmige Teil (22) enthält, eine Feder (23) auf eine derartige Weise zusammenwirkt, daß, wenn die Kugel (2) der Anhängerkupplung (1) gegen die obere Wand der rinnenförmigen Aussparung (12) anliegt, das schalenförmige Teil (22) aufgrund der Federkraft gegen die Kugel (2) geklemmt wird, und daß es mit einem Griff (17) versehen ist, der um eine Achse drehbar ist, parallel zu oder zusammenfallend mit der Kippachse des schalenförmigen Teiles (22) das mit der Feder (23) derartig zusammenwirkt, daß, wenn der Griff (17) gezogen wird, die Federkraft auf den Körper (21) wegfällt und so der schalenförmige Teil (22) kippbar wird.

5. Vorrichtung gemäß Anspruch 4,
dadurch gekennzeichnet, daß der Griff (17) an beiden Seiten Vorsprünge (19) hat, die in mit Nuten versehenen Löchern (28) in den Seitenwänden (15) des Gepäckträgerteils verlaufen, die mit Löchern (25) in den Wänden des Körpers (21) zusammenarbeiten, so daß, wenn der Griff betätigt wird, der Körper (21) und mit dem Körper das schalenförmige Teil (22) dreht.

6. Vorrichtung gemäß Anspruch 5.
dadurch gekennzeichnet, daß der Griff (17) über seiner Drehachse (16) einen Vorsprung (20) hat, der durch eine Öffnung (18) in der oberen Wand des Gehäuses ragt, und daß er weiterhin eine sich unter jener oberen Wand erstreckende Schulter (27) zeigt, die wenn der Griff (17) gegen die obere Wand des Gehäuses gedrückt wird, es unmöglich macht, den Griff(17) zu drehen und damit die Kupplung zu lösen.

## Revendications

1. Porte-bagages et dispositif pour monter ce porte-bagages sur le crochet de remorquage (1) d'une automobile, avec une pièce de fixation qui est montée sur la partie horizontale du crochet de remorquage (1), munie d'une partie avec des éléments de guidage (8,9), qui ressort vers l'arrière et qui coopère avec des parties (10,11) du porte-bagages, de façon telle que le porte-bagages peut se déplacer perpendiculairement au crochet de remorquage (1), le mouvement étant limité vers le bas puisqu'une partie du porte-bagages est stoppée par la boule (2) du crochet de remorquage (1),
caractérisés en ce que la partie porte-bagages, qui est équipée avec des éléments (10,11) qui coopèrent avec les éléments de guidage (8,9), possède un découpage en forme de gouttière qui peut tenir la partie verticale du crochet de remorquage (1) et la boule (2), et possède sur sa face supérieure un mécanisme avec lequel elle peut être fixée sur la boule (2), et elle peut être verrouillée dans cette situation.

2. Un dispositif d'après la revendication 1,
caractérisé en ce que le mécanisme de fixation du porte-bagages comprend un corps (21) avec une partie en forme de coquille (22), qui retient, en position de fixation, une partie de la boule (2).

3. Un dispositif d'après la revendication 1 ou 2,
caractérisé en ce que le mécanisme de fixation est un mécanisme à déclic qui fonctionne automatiquement lorsqu'il est placé sur la boule (2).

4. Un dispositif d'après la revendication 1 ou 2,
caractérisé en ce que avec le corps (21) comprenant la partie rabattable en forme de coquille (22) un ressort (23) coopère, de sorte que, lorsque la boule (2) du crochet de remorquage (1) se trouve contre la paroi supérieure du découpage en forme de gouttière (12), la partie en forme de coquille (22) est fixée par la force du ressort contre la boule (2), celle-ci étant munie d'une poignée (17) qui peut tourner autour d'un axe parallèle ou coïncidant à l'axe d'inclinaison de la partie en forme de coquille (22) qui coopère avec le ressort (23), de sorte que, lorsque l'on tire sur la poignée (17), la force du ressort cesse de s'exercer sur le corps (21), la partie en forme de coquille (22) devenant ainsi rabattable.

5. Un dispositif d'après la revendication 4,
caractérisé en ce que des deux côtés la poignée (17) possède des saillies (19) qui se déplacent dans des trous (20) insérés dans les parois latérales (15) de la partie porte-bagages, coopérant avec des trous (25) dans les parois du corps (21), de sorte que, si l'on active la poignée, le corps (21), et avec le corps la partie en forme de coquille (22), tourne.

6. Un dispositif d'après la revendication 5,
caractérisé en ce que la poignée (17) possède une saillie (20) par-dessus son axe de rotation (16), qui dépasse par une ouverture (18) dans la paroi supérieure du boîtier, et présente également un épaulement (27) qui s'étend sous cette paroi supérieure, qui, lorsque la poignée (17) est poussée contre la paroi supérieure du boîtier, empêche de tourner la poignée (17) et également d'ouvrir l'attelage.
